# EUROPÄISCHE PATENTSCHRIFT

(11) **EP 0 957 065 B1**
(45) Veröffentlichungstag und Bekanntmachung des Hinweises auf die Patenterteilung: **17.09.2003**
(21) Anmeldenummer: 99109070.5
(22) Anmeldetag: 07.05.1999
(51) Int. Cl.: C01B 33/26

(54) **Aluminiumsilikatsuspension**
Aluminium silicate suspension
Suspension de silicate d' aluminium

(30) Priorität: 12.05.1998 DE 19821143
(43) Veröffentlichungstag der Anmeldung: 17.11.1999
(73) Patentinhaber: Degussa AG, 40474 Düsseldorf (DE)
(72) Erfinder: Schubert, Jürgen Dr., 63584 Gründau (DE); Glaum, Holger Dr., 63477 Maintal (DE)

(56) Entgegenhaltungen:
- EP-A- 0 046 171
- FR-A- 2 628 341
- GB-A- 2 245 262

## Beschreibung

Die Erfindung betrifft eine wäßrige Aluminiumsilikatsuspension, ein Verfahren zu ihrer Herstellung und ihre Verwendung.

Aluminiumsilikat, wie zum Beispiel P 820, wird beschrieben in Ullmanns Enzyklopädie der technischen Chemie, 4. Auflage, Band 21, Seite 467, Tabelle 12. Es wird als Massenfüllstoff bei der Papierherstellung eingesetzt. Durch den Einsatz von Aluminiumsilikat kann die Bedruckbarkeit von Zeitungs- und Dünndruckpapier verbessert werden. Aluminiumsilikat ist ein weißes Pulver, welches in dieser Form vertrieben wird. Bei der Papierherstellung werden jedoch nahezu alle Edukte in Form von wäßrigen Suspensionen eingesetzt. Das Aluminiumsilikat hat daher den Nachteil, daß für seinen Einsatz bei der Papierherstellung separate Vorrichtungen für die Verarbeitung aufgrund der pulverförmigen Konsistenz errichtet und verwendet werden müssen. Dieser Nachteil kann überwunden werden, wenn das Aluminiumsilikatpulver in Form einer wäßrigen Suspension bei der Papierfabrikation eingesetzt werden kann.

Es besteht daher die Aufgabe, das pulverförmige Aluminiumsilikat in eine wäßrige, lagerstabile Suspension mit einem hohen Feststoffgehalt, die bei der Papierherstellung verwendet werden kann, überzuführen.

Gegenstand der Erfindung ist eine wäßrige Aluminiumsilikatsuspension, welche dadurch gekennzeichnet ist, daß sie neben Wasser mindestens 30 Gew.-%, bevorzugt mindestens 35 Gew.-%, Aluminiumsilikat, 0,1 bis 3,0 Gew.-% Aluminiumsulfat und 0,1 bis 5,0 Gew.-% Tenside aus der Gruppe Polyethylenoxid, Polyacrylate und Natriumcitrat enthält.

In einer bevorzugten Ausführungsform der Erfindung kann als Aluminiumsilikat das Aluminiumsilikat P 820 eingesetzt werden.

Als Tenside werden als nichtionisches Tenside Polyethylenoxid und als anionische und/oder kationische Tenside Polyacrylate und Natriumcitrat eingesetzt.

Der Feststoffgehalt der Suspension kann in einer bevorzugten Ausführungsform 35 bis 45 Gew.%, insbesondere 35 bis 40 Gew.-%, betragen. Der pH-Wert der Suspension kann zwischen 4,5 und 9,5, bevorzugt zwischen 5,0 und 8,0, liegen.

Ein weiterer Gegenstand der Erfindung ist ein Verfahren zur Herstellung der Aluminiumsilikatsuspension, welches dadurch gekennzeichnet ist, daß man ein Aluminiumsilikat auf synthetischem Wege aus Aluminiumsulfat und Wasserglas ausfällt und abfiltriert, den Aluminiumsilikatfilterkuchen unter Rühren und/oder Scheren mit einer wäßrigen Aluminiumsulfatlösung verflüssigt, mindestens ein Tensid hinzufügt, zu dem verflüssigten Aluminiumsilikatfilterkuchen unter Rühren und/oder Scheren pulverförmiges Aluminiumsilikat hinzugibt und die Mischung gegebenenfalls ein weiteres Mal rührt und/oder schert.

In einer Ausführungsform der Erfindung kann man den Aluminiumsilikatfilterkuchen waschen und trocknen. Das erhaltene Aluminiumsilikatpulver kann man unter Rühren und/oder Scheren mit einer wäßrigen Aluminiumsulfatlösung vermischen, mindestens ein Tensid hinzufügen, zu dieser Suspension unter Rühren und/oder Scheren weiteres pulverförmiges Aluminiumsilikat hinzufügen und die Mischung gegebenenfalls ein weiteres Mal rühren und/oder scheren.

Die erfindungsgemäße wäßrige Aluminiumsilikatsuspension weist vorteilhafterweise einen hohen Feststoffgehalt auf. Eine Sedimentation des Feststoffes tritt selbst bei einer längeren Lagerzeit nicht ein.

Eine Mahlung zur Destrukturierung ist nicht notwendig.

Die erfindungsgemäße wäßrige Aluminiumsilikatsuspension kann bei der Papierherstellung eingesetzt werden.

### Beispiele

Die Ausgangsmaterialien sind in Tabelle 1 charakterisiert:

**Tabelle 1**

| Physikalisch-chemische Daten von P 820A-Pulver und Filterkuchen | | |
|---|---|---|
| | **P 820A Pulver** | **P 820 A Filterkuchen** |
| Stampfdichte [g/1] | 237 | - |
| Trockenverlust [%] | 6,4 | 70,0 |
| Feststoffgehalt [%] | 93,6 | 30 |
| mittlere Korngröße [µm] | 5,6 | 7,5 |
| Oberfläche m²/g] | 66 | - |
| DBP-Adsorption [g/100 g] | 90 | - |
| pH-Wert | 9,5 | 8,9 (Slurry) |

### Herstellung des Slurry

2400 g Aluminiumsilikat P 820A-Teig werden nach und nach in einen 5 1-Meßbecher gegeben und mit dem Dispermat® bei 8500 U/min geschert. Gleichzeitig gibt man 30 ml Al₂(SO₄)₃-Lösung mit einer Konzentration von 90 g/l in Etappen dazu. Die Scherzeit des Verflüssigens beträgt 14 min.

Der Einfluß des Aluminiumsulfatzusatzes sowie des Scherens kann den Tabellen 2 und 3 entnommen werden.

**Tabelle 2**

| **Alumuniumsulfat** | | **pH-Wert** | **Viskosität [mPa*s]** |
|---|---|---|---|
| **[ml Lösung]** | **[g/100g Slurry]** | | |
| 0 | 0 | 8,9 | 2000 |
| 0,5 | 0,02 | 8,9 | 2000 |
| 2 | 0,09 | 8,2 | 1800 |
| 4 | 0,18 | 6,8 | 1600 |
| 6 | 0,27 | 6,1 | 1500 |
| 8 | 0,36 | 5,7 | 1430 |
| 10 | 0,45 | 5,3 | 1400 |
| 12 | 0,54 | 5,1 | 1500 |
| 14 | 0,63 | 4,9 | 1900 |
| 16 | 0,72 | 4,8 | 1650 |
| 18 | 0,81 | 4,6 | 1650 |
| 20 | 0,90 | 4,5 | 1450 |
| 25 | 1,13 | 4,4 | 1200 |

**Tabelle 3**

| **Scherzeit [min]** | **Viskosität [mPa*s]** | **mittlere Teilchengröße d**_{**50**} **[µm]** |
|---|---|---|
| 0 | 2600 | 7,7 |
| 5 | 100 | 7,1 |
| 10 | 80 | 7,1 |
| 15 | 65 | 7,1 |
| 20 | 55 | 7,1 |

Der Tensidzusatz wird bei niedriger Umdrehungszahl eingerührt. Danach wird die Suspension eine Minute bei 8500 U/min dispergiert. Die zugesetzte Menge ist in den Tabellen 5 bis 7 angegeben.

Jetzt wird mit P 820A-Pulver der gewünschte Feststoffgehalt eingestellt.
35 % FG: Zugabe von 217,1 g Pulver
40 % FG: Zugabe von 456,3 g Pulver

Die Zeit für das Aufkonzentrieren beträgt 15 min. Die so erhaltene Suspension wird noch weitere 30 min bei 8500 U/min dispergiert.

Der Slurry wird zum Schluß noch einmal 15 min mit dem Ultra-Turrax® bei gleichzeitigem Rühren mit dem IKA®-Laborrührer (Dispergierscheibe ø = 6 cm, 1000 U/min) geschert.

Bei den Aluminiumsilikat-(P 820 A)-Suspensionen, die bei Raumtemperatur lagern, werden Sedimentation, pH-Wert, Viskosität, Grindometer-Wert und die Zeit zum Redispergieren durch Rütteln und Drehen bestimmt. Nach einem Tag wird zusätzlich der tatsächliche Feststoffgehalt bestimmt. Diese Werte werden 1 d, 4 Wochen und 14 Wochen nach Herstellung der Suspension ermittelt.

### Beschreibung der verwendeten Methoden

### Sedimentation

Die einzelnen Schichten der Suspension werden mit dem Zentimetermaß vermessen. Folgende drei Arten sind zu unterscheiden:
1. Überstehendes Wasser
2. Suspension
3. Bodensatz

### Verflüssigung durch Rütteln

Die Probenflaschen werden kopfüber in das Rüttelsieb (Fa. Retsch, AS 200 digit) eingespannt und bei Amplitude 100 mit Intervall gerüttelt. Es wird die Zeit, bis die Suspensionen vollständig redispergiert sind, bestimmt. Wenn keine Redispergierung zu erreichen ist, wird der Versuch nach 10 min abgebrochen.

### Verflüssigung durch Drehen

Auf dem Rollenmischer (Einstellung 1) werden die Proben so lange gedreht, bis sich wieder eine homogene Suspension gebildet hat. Auch hier beträgt die maximale Behandlungszeit 10 min.

### Messen des pH-Wertes

Die verflüssigte Suspension wird 5 min auf dem Magnetrührer durchmischt. Nach dem Abschalten des Rührers wird der pH-Wert abgelesen.

### Messen der Viskosität

Sofort nach der Bestimmung des pH-Wertes wird die Viskosität mit dem Brookfield DV-II+ gemessen (Spindel-Nr. 62, 100 RPM). Auch hier wird der Wert nach 5 min abgelesen.

### Grindometer

Nach gutem Durchmischen der Suspension wird die Körnung der Suspension mit dem Grindometer bestimmt.

### Feststoffgehalt

100 g der redispergierten Suspension werden im Trockenschrank bei 105 °C bis zur Gewichtskonstanz getrocknet.

Falls eine Verflüssigung der Suspension nicht durch Rütteln oder Drehen zu bewerkstelligen ist, versucht man die Suspension mit dem Spatel zu verflüssigen.

pH-Wert, Viskosität, Grindometer-Wert und Feststoffgehalt werden nur bei einer vollständig redispergierten Suspension bestimmt.

Die nach den angegebenen Prüfmethoden ermittelten Daten sind in den Tabellen 6 - 8 aufgelistet. Um die Eignung eines Zusatzes zur Verbesserung der Suspensionseigenschaften zu beurteilen, sind drei Faktoren näher in Betracht zu ziehen: Die Einarbeitbarkeit des Zusatzes, das Sedimentationsverhalten der Suspension sowie die Redispergierbarkeit des Bodensatzes.

### Sedimentationsverhalten

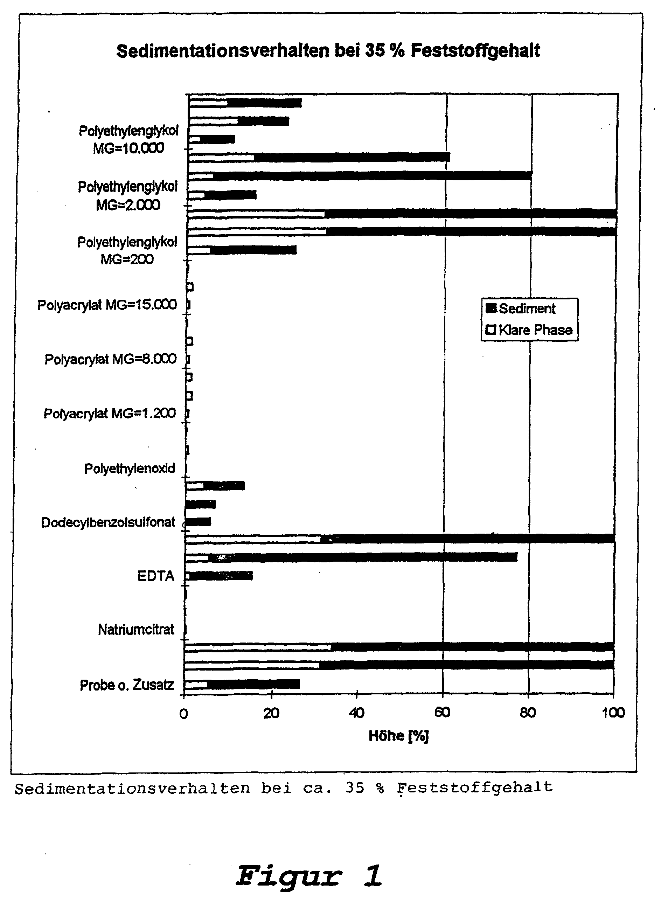

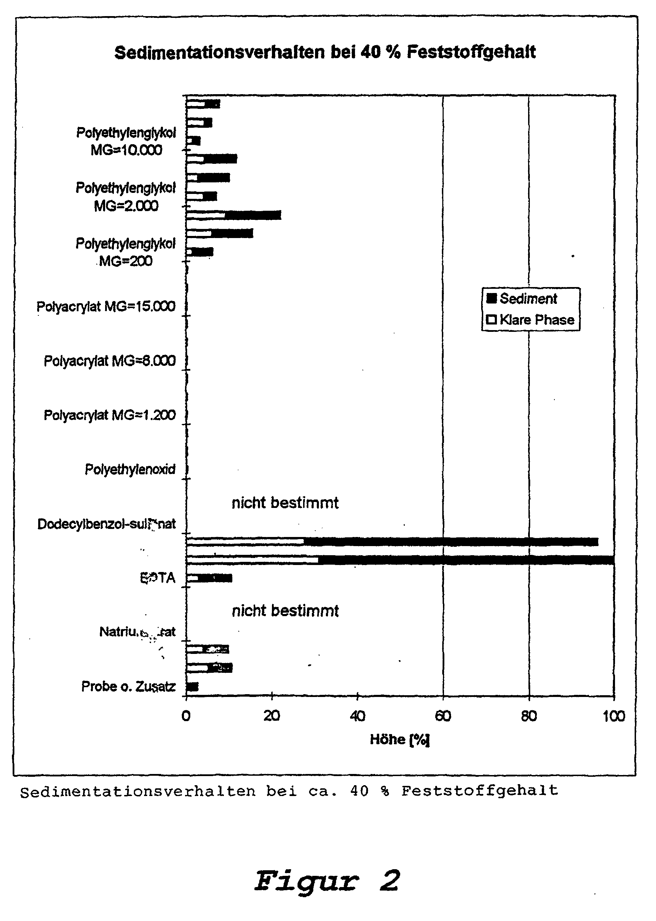

In den Figuren 1 und 2 ist das Sedimentationsverhalten der mit unterschiedlichen Stabilisatoren versetzten Suspensionen für Feststoffgehalte von ca. 35 Gew.-% beziehungsweise 40 Gew.-% dargestellt. Die Höhen der Sediment- und Wasserphase sind in diesen Abbildungen widergegeben. Für jeden Zusatz (abgegrenzt durch die kleine Querlinie auf dem linken Rand des Diagramms) sind die Werte für die Lagerung nach 1 d (unterster Balken), nach 4 Wochen (mittlerer Balken) und 14 Wochen (oberer Balken) aufgezeichnet. Eine gute Lagerstabilität liegt dann vor, wenn sich kein festes Sediment bildet und wenn sich oberhalb der Suspension keine klare Wasserphase bildet, also immer dann, wenn die Summe der Sedimentationshöhe und der Höhe der Wasserphase gegen Null geht. Dies ist für alle untersuchten Polyacrylate und für Polyethylenoxid sowohl bei einem Feststoffgehalt von 35 % als von 40 % der Fall. Natriumcitrat und Dodecylbenzolsulfonat konnten nur bei einem Feststoffgehalt von 35 % untersucht werden und zeigt ebenfalls eine sehr geringe Neigung zur Sedimentation.

### RedisDergierbarkeit

Die Suspensionen sind zwar nach der Herstellung flüssig, werden aber beim Abkühlen pastös. Dies kann auch durch die Zugabe der untersuchten Zusätzen nicht verhindert werden. Die Suspensionen unterscheiden sich jedoch sehr stark darin, mit welchem Energieaufwand eine Verflüssigung erfolgen kann. Es wird versucht, diesen notwendigen Energieeintrag durch ein definiertes Rütteln oder Drehen des Probenglases zu erfassen. Bei einigen Proben kann dadurch eine Verflüssigung erreicht werden. Es gibt aber auch Suspensionen, die durch bloßes Rütteln und Drehen nicht zu verflüssigen sind, dies aber sofort tun, nachdem die Suspensionsoberfläche mit einem Spatel angestochen wird. Daher werden für die Beurteilung der Redispergierbarkeit alle Beobachtungen zusammengenommen und subjektiv einer Skala von sehr gut bis sehr schlecht zugeordnet. Die Ergebnisse sind in der Tabelle 4 aufgeführt.

### Einarbeitbarkeit

Unter Einarbeitbarkeit ist zu verstehen, wie sich nach Zugabe des Stabilisators die Einarbeitung des Pulvers zur Aufkonzentration des Slurrys gestaltete. Diese Größe ist meßtechnisch nicht zu fassen, daher wurde dafür die subjektive Beurteilung des Durchführenden herangezogen.

**Tabelle 4**

| Beurteilung der verschiedenen Stabilisatoren | | | |
|---|---|---|---|
| **Stabilisator** | **Einarbeitbarkeit** | **Sedimeritationsverhalten** | **Redispergierbarkeit** |
| Polyethylenoxid | + | ++ | + |
| Potyacrylat (MG = 1.200) | + | + | + |
| Polyacrylat (MG = 8.000) | + | + | + |
| Polyacrylat (MG = 15.000) | + | + | + |
| Natrimcitrat | - | + | + |
| EDTA | ++ | - | -- |
| Polyethylenglykol (MG = 200) | ++ | - | -- |
| Polyethylenglykol (MG = 2.000) | + | - | - |
| Polyethylenglykof (MG = 10.000) | + | - | o |
| Dodecylbenzolsulfonat | -- | o | -- |
| ++ sehr gut + gut o ausreichend - schlecht -- sehr schlecht | | | |

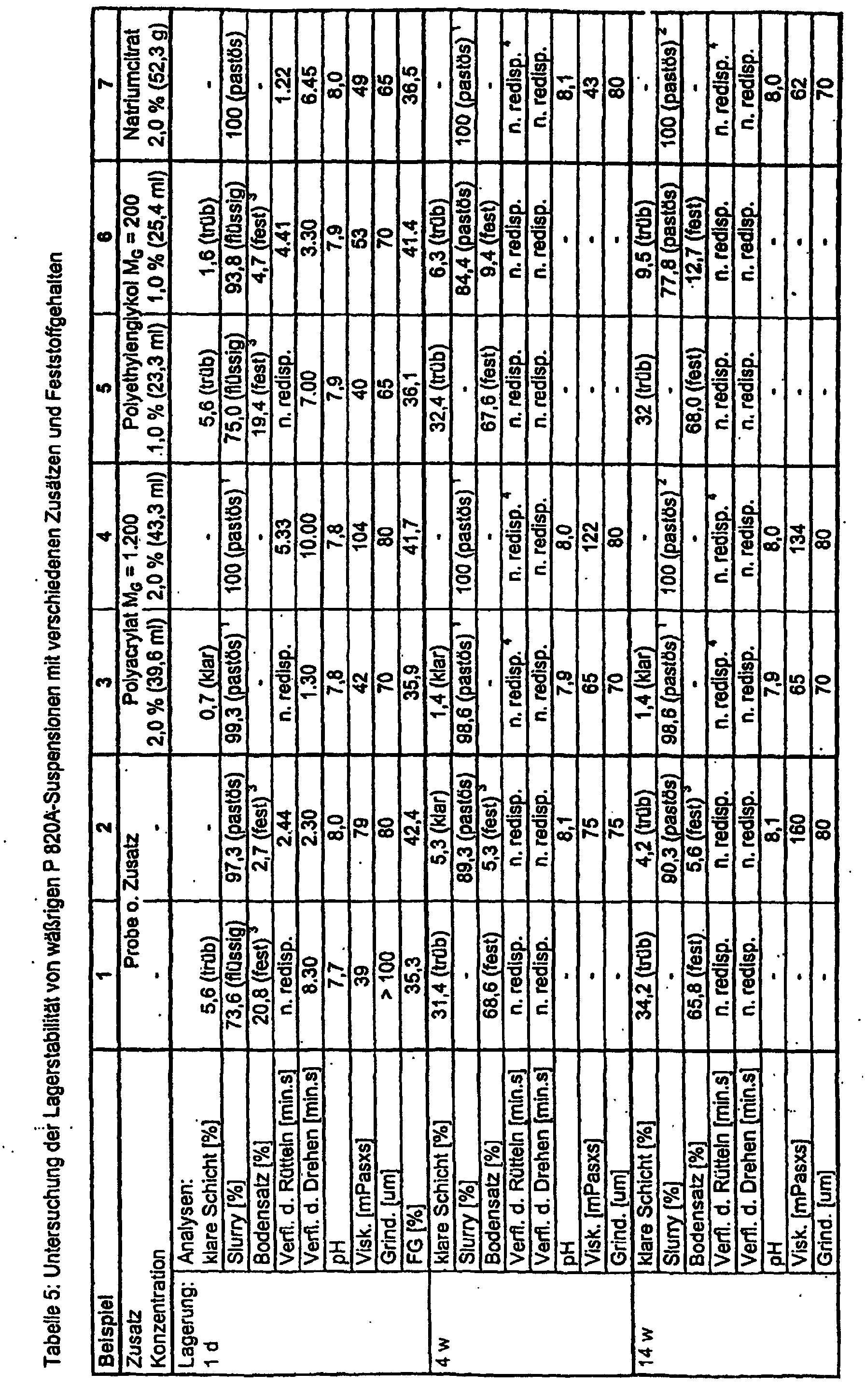

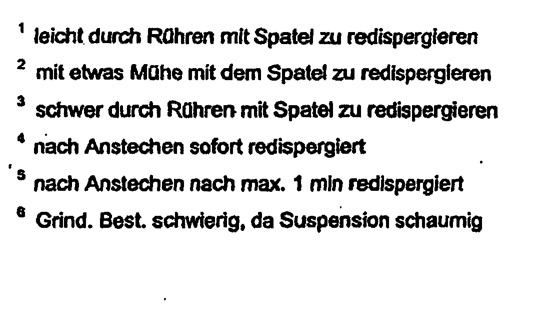

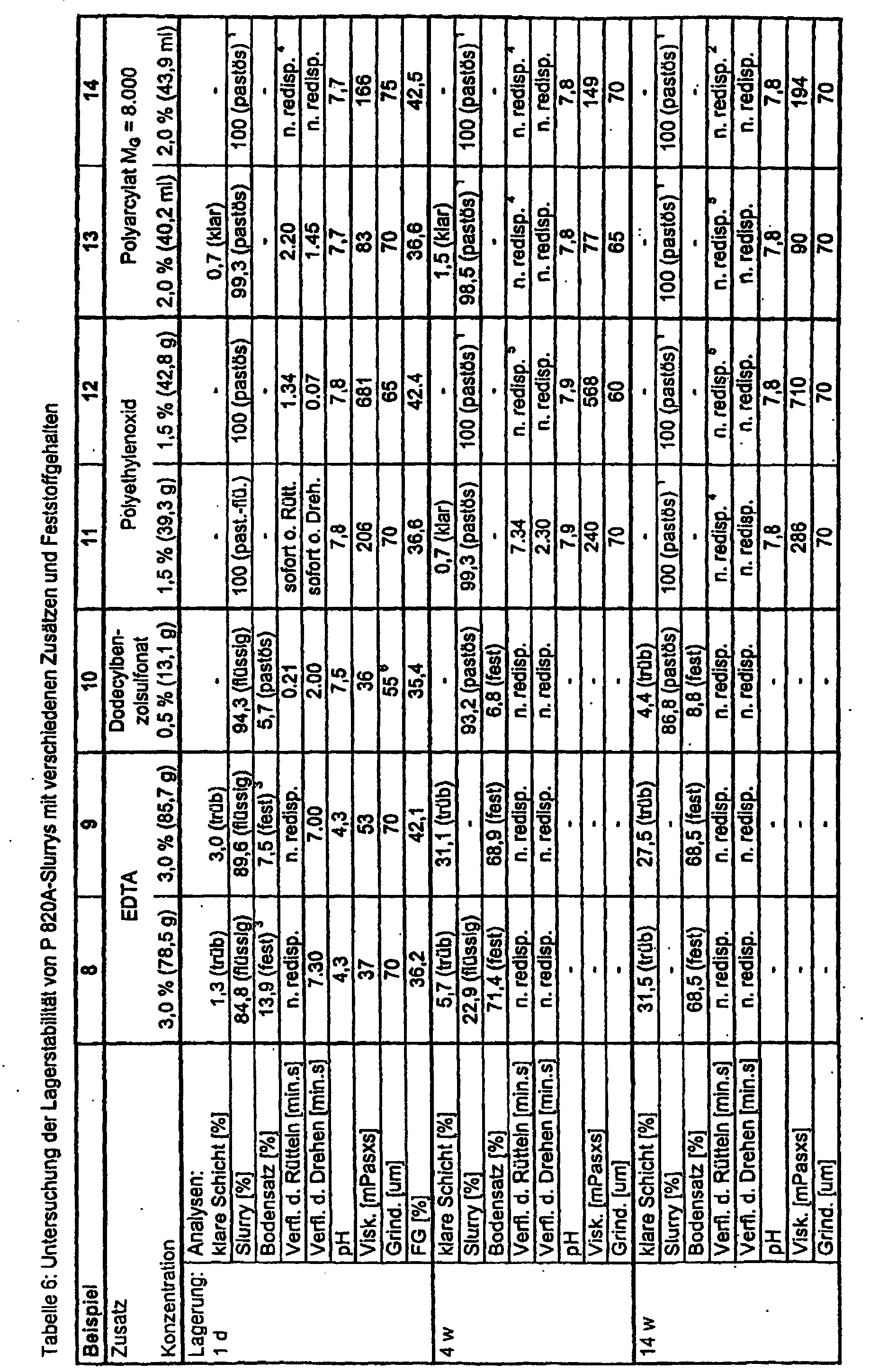

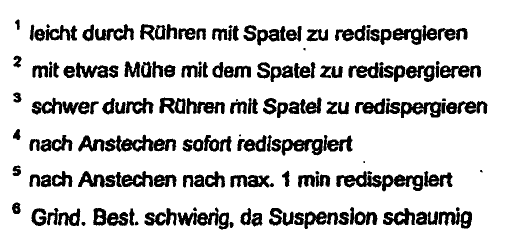

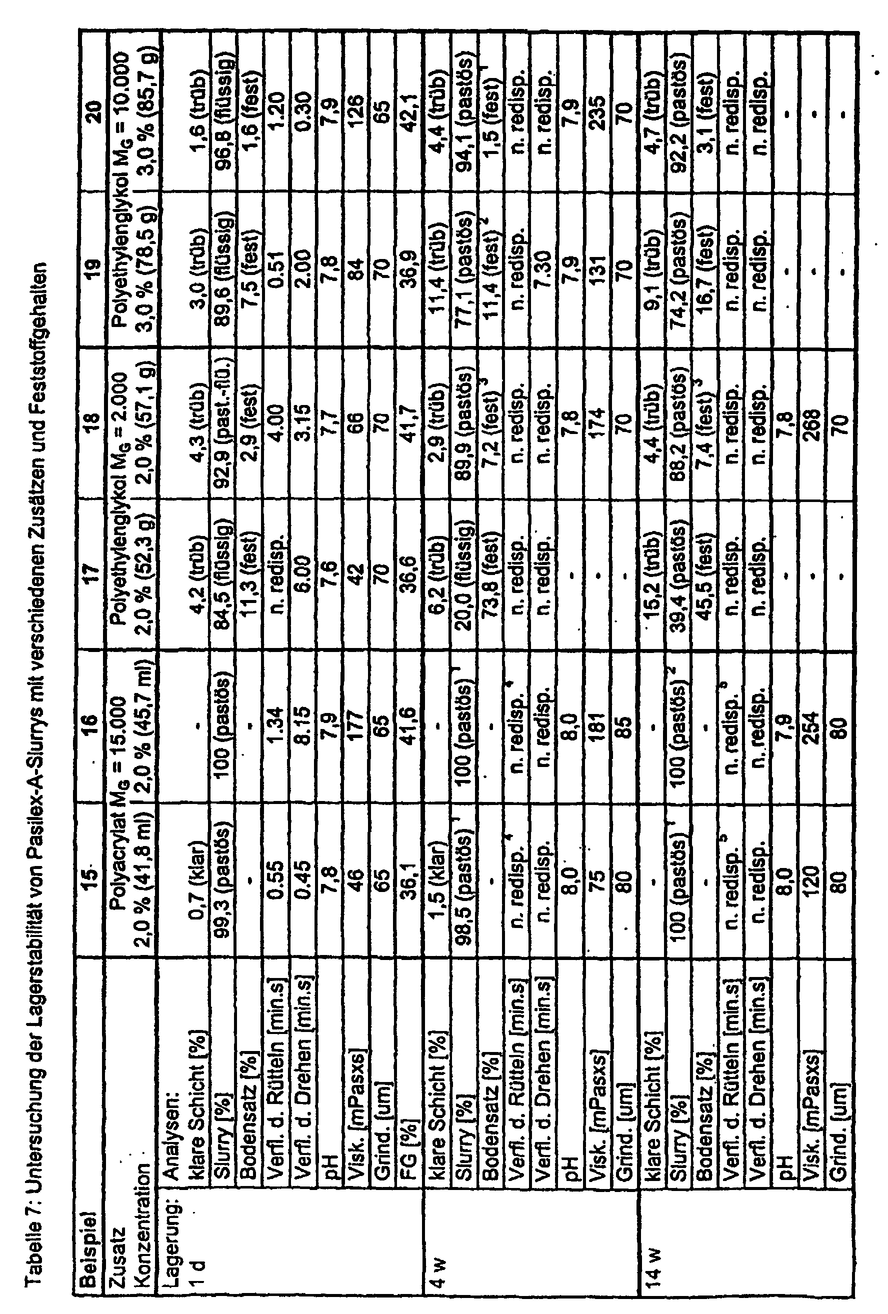

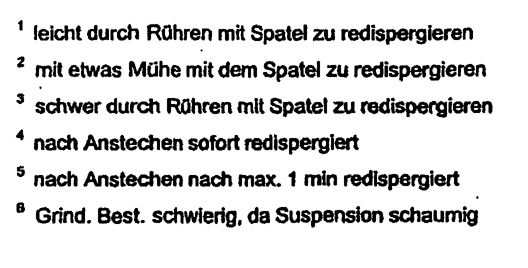

## Patentansprüche

1. Wäßrige Aluminiumsilikatsuspension, **dadurch gekennzeichnet, daß** sie neben Wasser mindestens 30 Gew.-% Aluminiumsilikat, 0,1 bis 3,0 Gew.-% Aluminiumsulfat und 0,1 bis 5,0 Gew.-% Tenside aus der Gruppe Polyethylenoxid, Polyacrylate und Natriumcitrat enthält.

2. Verfahren zur Herstellung der Aluminiumsilikatsuspension nach Anspruch 1, **dadurch gekennzeichnet, daß** man ein Aluminiumsilikat auf synthetischem Wege aus Aluminiumsulfat und Wasserglas ausfällt und abfiltriert, den Aluminiumsilikatfilterkuchen unter Rühren und/oder Scheren mit einer wäßrigen Aluminiumsulfatlösung verflüssigt, mindestens ein Tensid hinzufügt, zu dem verflüssigten Aluminiumsilikatfilterkuchen unter Rühren und/oder Scheren pulverförmiges Aluminiumsilikat hinzugibt und die Mischung gegebenenfalls ein weiteres Mal rührt und/oder schert.

3. Verfahren zur Herstellung der Aluminiumsilikatsuspension nach Anspruch 2, **dadurch gekennzeichnet, daß** man den Aluminiumsilikatfilterkuchen wäscht und trocknet, das erhaltene Aluminiumsilikatpulver unter Rühren und/oder Scheren mit einer wäßrigen Aluminiumsulfatlösung vermischt, mindestens ein Tensid hinzufügt, zu dieser Suspension unter Rühren und/oder Scheren weiteres Aluminiumsilikatpulver hinzufügt und die Mischung gegebenenfalls ein weiteres Mal rührt und/oder schert.

4. Verwendung der Aluminiumsilikatsuspension bei der Herstellung von Papier.

## Claims

1. An aqueous aluminium silicate suspension **characterized in that** it comprises, in addition to water, at least 30% by weight aluminium silicate, from 0.1 to 3.0% by weight aluminium sulphate and from 0.1 to 5.0% by weight surfactants from the group consisting of polyethylene oxide, polyacrylates and sodium citrate.

2. A process for the preparation of the aluminium silicate suspension according to claim 1, **characterized in that** an aluminium silicate is precipitated by a synthetic route from aluminium sulphate and water-glass and filtered off, the aluminium silicate filter cake is liquefied with stirring and/or shearing with an aqueous aluminium sulphate solution, at least one surfactant is added, pulverulent aluminium silicate is added to the liquefied aluminium silicate filter cake with stirring and/or shearing, and the mixture if desired is stirred and/or sheared once more.

3. A process for the preparation of the aluminium silicate suspension according to claim 2, **characterized in that** the aluminium silicate filter cake is washed and dried, the resulting aluminium silicate powder is mixed with an aqueous aluminium sulphate solution with stirring and/or shearing, at least one surfactant is added, further aluminium silicate powder is added to this suspension with stirring and/or shearing, and the mixture if desired is stirred and/or sheared once more.

4. The use of the aluminium silicate suspension in papermaking.

## Revendications

1. Suspension aqueuse de silicate d'aluminium,
**caractérisée en ce qu'**
elle contient, outre l'eau, au moins 30 % en poids de silicate d'aluminium, 0,1 à 3,0 % en poids de sulfate d'aluminium et 0,1 à 5,0 % en poids de dérivés tensioactifs appartenant au groupe formé par l'oxyde de polyéthylène, les polyacrylates et le citrate de sodium.

2. Procédé de fabrication de la suspension de silicate d'aluminium selon la revendication 1,
**caractérisé en ce qu'**
on précipite et on filtre un silicate d'aluminium obtenu par voie synthétique à partir de sulfate d'aluminium et de verre soluble ; on liquéfie le gâteau de filtre de silicate d'aluminium, en l'agitant et/ou en le cisaillant, à l'aide d'une solution aqueuse de sulfate d'aluminium ; on y ajoute au moins un tensioactif ; on ajoute au gâteau de filtre de silicate d'aluminium liquéfié, en l'agitant et/ou en le cisaillant, du silicate d'aluminium poudreux ; enfin, le cas échéant, on agite et/ou on cisaille le mélange une nouvelle fois.

3. Procédé de fabrication de la suspension de silicate d'aluminium selon la revendication 1,
**caractérisé en ce qu'**
on lave et on sèche le gâteau de filtre de silicate d'aluminium ; on mélange la poudre de silicate d'aluminium obtenue, en l'agitant et/ou en la cisaillant, avec une solution aqueuse de sulfate d'aluminium ; on y ajoute au moins un tensioactif ; on ajoute à cette suspension, en l'agitant et/ou en la cisaillant, de la poudre de silicate d'aluminium supplémentaire ; enfin, le cas échéant, on agite et/ou on cisaille le mélange une nouvelle fois.

4. Utilisation de la suspension de silicate d'aluminium pour la fabrication de papier.
